# FASCICULE DE BREVET EUROPEEN

(11) **EP 1 175 140 B1**
(45) Date de publication et mention de la délivrance du brevet: **13.08.2003**
(21) Numéro de dépôt: 00925376.6
(22) Date de dépôt: 03.05.2000
(51) Int. Cl.: A01G 9/10

(54) **CONTENEUR POUR LA CULTURE DE PLANTS, NOTAMMENT D'ARBRES**
BEHÄLTER FÜR DIE ZUCHT VON PFLANZEN, INSBESONDERE BAÜMEN
CONTAINER FOR GROWING PLANTS, IN PARTICULAR TREES

(30) Priorité: 05.05.1999 FR 9905719
(43) Date de publication de la demande: 30.01.2002
(73) Titulaire: Chanet, Guy, 73190 Saint-Jeoire-Prieure (FR)
(72) Inventeur: Chanet, Guy, 73190 Saint-Jeoire-Prieure (FR)
(74) Mandataire: Casalonga, Axel
(86) Numéro de dépôt international: FR0001190
(87) Numéro de publication internationale: WO00067555

(56) Documents cités:
- EP-A- 0 274 769
- WO-A-82/01460
- WO-A-96/03857
- US-A- 5 459 960

## Description

La présente invention concerne un conteneur pour la culture de plants, notamment d'arbres, selon le préambule de la revendication 1.

Lorsqu'on cultive des plants dans des conteneurs classiques, par example connus de EP0274769, en général de forme conique, les racines ont tendance à former un chignon par enroulement, principalement dans la partie inférieure du conteneur. Pour éviter cet inconvénient, on a déjà proposé de former des obstacles verticaux qui dévient les racines vers le bas.

On connait également des contenuers qui comprennent uniquement une paroi latérale ajourée et de forme tronconique, ce cône étant ouvert vers le bas. Ces conteneurs, bien qu'améliorant la croissance des racines des plants, présentent l'inconvénient d'être difficilement exploitable de façon industrielle car ils nécessitent des retournements et ne peuvent pas présenter un fond.

Un objectif de la présente invention est de proposer un conteneur permettant d'éviter ou de limiter la formation de chignons par enroulement des racines des plants.

Un autre objectif de la présente invention est de proposer un conteneur dans la partie inférieure duquel le système racinaire des plants peut en particulier se développer.

Un autre objectif de la présente invention est de proposer un conteneur susceptible d'être fabriqué et utilisé de façon industrielle, sans normalement accroître le nombre des opérations que les utilisateurs ont l'habitude d'effectuer avec des conteneurs classiques.

Pour atteindre ces objectifs, le conteneur selon l'invention est tel que sa paroi latérale comprend une partie supérieure annulaire et une partie inférieure annulaire de préférence plus petite, qui sont coaxiales, des parties espacées de liaison reliant et maintenant l'une par rapport à l'autre ladite partie supérieure et ladite partie inférieure, et, entre lesdites parties de liaison, des parties déformables comprenant des branches principales, qui, dans une position initiale, présentent des plis et qui sont susceptibles d'être étendues ou allongées par déformation de ces plis de façon à atteindre une position déployée dans laquelle lesdites parties déformables forment des ventres en saillie vers l'extérieur.

Selon une variante de l'invention, lesdites branches présentent de préférence des extrémités reliées d'une part à ladite partie supérieure et d'autre part à ladite partie inférieure.

Selon une variante de l'invention, lesdites parties déformables comprennent de préférence des branches secondaires reliant lesdites branches principales.

Selon une variante de l'invention, lesdites parties déformables comprennent de préférence des branches secondaires reliant les branches principales et les parties espacées adjacentes.

Selon une variante de l'invention, lesdites parties déformables comprennent de préférence des plaques reliées de façon articulée à ladite partie inférieure annulaire, lesdites branches principales présentant des extrémités reliées à ces plaques.

Selon une variante de l'invention, lesdites plaques, en position déployée vers l'extérieur, sont de préférence inclinées vers l'intérieur.

Selon une variante de l'invention, le conteneur peut avantageusement comprendre une soucoupe dont le bord périphérique est relié à ladite partie inférieure annulaire.

Selon une variante de l'invention, une ligne d'affaiblissement est prévue entre ladite soucoupe et ladite partie annulaire inférieure, constituant une ligne de rupture pour la séparation de la soucoupe.

Selon une variante de l'invention, des lignes d'affaiblissement sont de préférence prévues entre lesdites plaques et ladite partie inférieure annulaire, constituant l'articulation précitée.

Selon une variante de l'invention, lesdites lignes d'affaiblisement sont rectilignes.

Selon une autre variante de l'invention, lesdites lignes d'affaiblissement sont arquées.

Selon une variante de l'invention, lesdites parties de liaison sont de préférence ajourées.

Selon une variante de l'invention, en position déployée, lesdites parties déformables présentent de préférence une partie inférieure plus volumineuse que leur partie supérieure.

Selon une variante de l'invention, lorsque ses parties déformables précitées sont pliées, sa paroi latérale présente de préférence des dépouilles telles qu'il peut être fabriqué par moulage par injection dans un moule dont une partie présente un puits et son autre partie une forme en saillie.

Selon une variante de l'invention, lesdites parties de liaison présentent de préférence des génératrices droites.

La présente invention sera mieux comprise à l'étude d'un conteneur pour la culture de plants, décrit à titre d'exemple non limitatif et illustré par le dessin sur lequel :
- la figure 1 représente, en perspective, un conteneur selon la présente invention, en position pliée ;
- la figure 2 représente une vue de dessus du conteneur de la figure 1, en position pliée ;
- la figure 3 représente une vue de côté du conteneur de la figure 1, en position pliée ;
- la figure 4 représente une vue en perspective du conteneur de la figure 1, en position déployée ;
- la figure 5 représente une vue de dessus du conteneur de la figure 1, en position déployée ;
- et la figure 6 représente une vue de côté du conteneur de la figure 1, en position déployée.

En se reportant aux figures, on voit qu'on a représenté un conteneur 1 dont la paroi latérale 2 du conteneur 1 comprend une partie supérieure annulaire 3, cylindrique et de faible hauteur, qui présente un rebord périphérique extérieur 4 de raidissement et une partie inférieure annulaire 5, constituée par une rondelle, qui comprend cinq côtés longs rectilignes 6 et cinq côtés courts de liaison 7, de façon à déterminer un hexagone. Ces parties 3 et 5 sont coaxiales et à distance l'une de l'autre et la partie inférieure 5 est plus petite que la partie supérieure 3 de façon à déterminer sensiblement un tronc de cône ouvert vers le haut.

La paroi latérale 2 comprend cinq parties ou flancs de liaison 8 qui relient et maintiennent à distance l'une de l'autre la partie supérieure 3 et la partie inférieure 5 et qui déterminent entre elles des ouvertures latérales 9.

Les extrémités inférieures 10 des parties de liaison 8 sont respectivement reliées aux côtés courts 7 de la partie inférieure annulaire 5 et leurs extrémités supérieures 11 sont reliées au bord inférieur de la partie annulaire 3 le long d'arcs 12. Les parties de liaison 8 présentent des génératrices droites et leurs côtés opposés 13 et 14 sont rectilignes et forment un V dont la pointe est dirigée vers le bas. La longueur des arcs 12 et la longueur des arcs 15 de la partie supérieure 3 qui les séparent et qui sont adjacents aux ouvertures 9 sont sensiblement égales.

Les parties de liaison 8 sont ajourées de façon à déterminer une multiplicité d'ouvertures latérales 16.

La paroi latérale 2 du conteneur 1 comprend en outre, entre les parties de liaison 8, cinq parties déformables 17 qui sont disposées dans la zone des ouvertures latérales 9.

Les parties déformables 17 comprennent des plaques inférieures 18 qui sont reliées aux bords des côtés longs 6 de la partie inférieure annulaire 5, entre lesquels sont prévues des lignes d'affaiblissement 19 rectilignes, de telle sorte que les plaques 18 sont articulées le long de ces lignes d'affaiblissement 19.

Les parties déformables 17 comprennent en outre, respectivement, quatre branches 20 espacées et réparties, dont les extrémités inférieures 21 sont reliées aux plaques 18 de façon articulée grâce à des lignes d'affaiblissement 22 et dont les extrémités supérieures 23 sont reliées à la partie annulaire supérieure 3 le long de ses arcs 15.

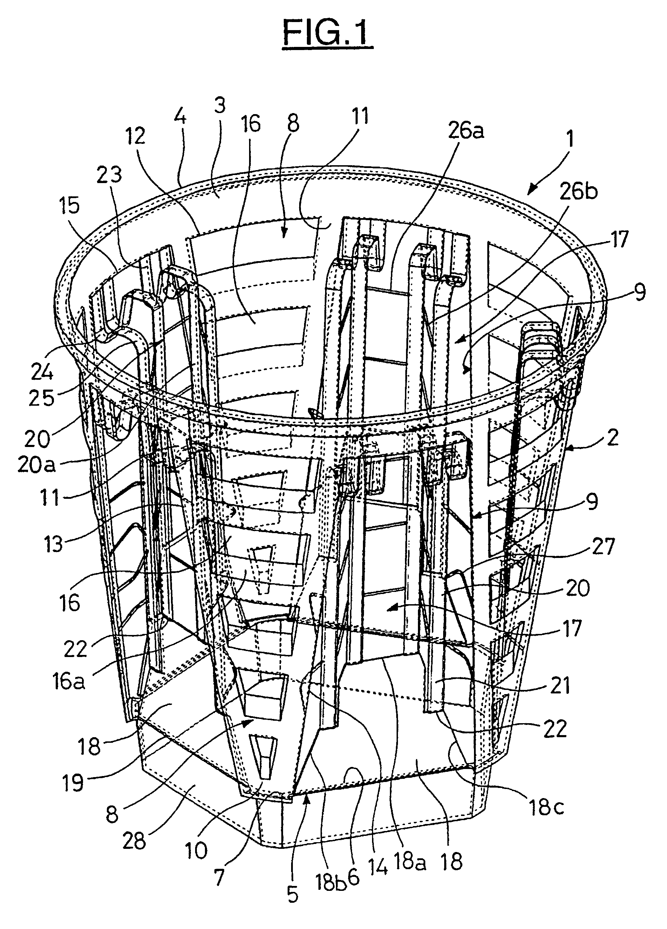

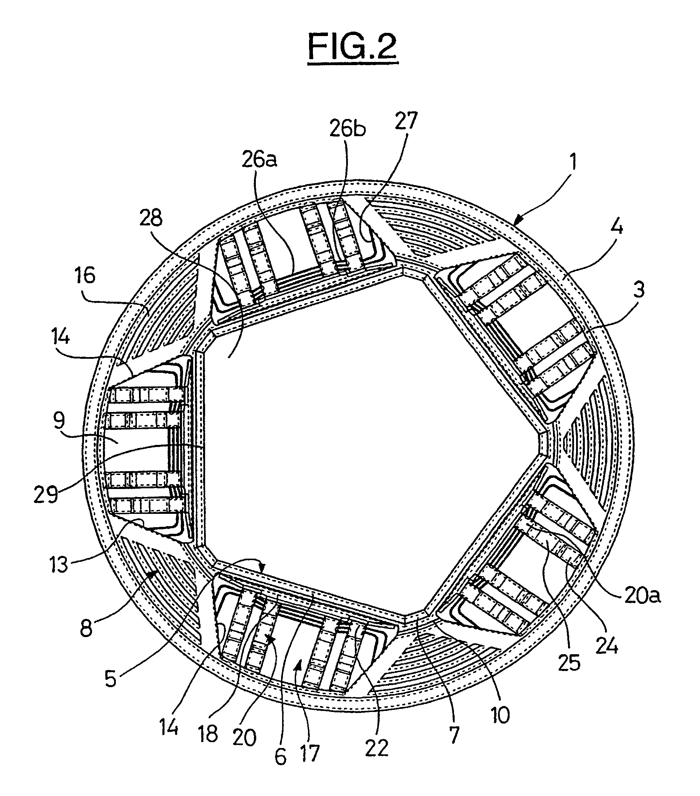

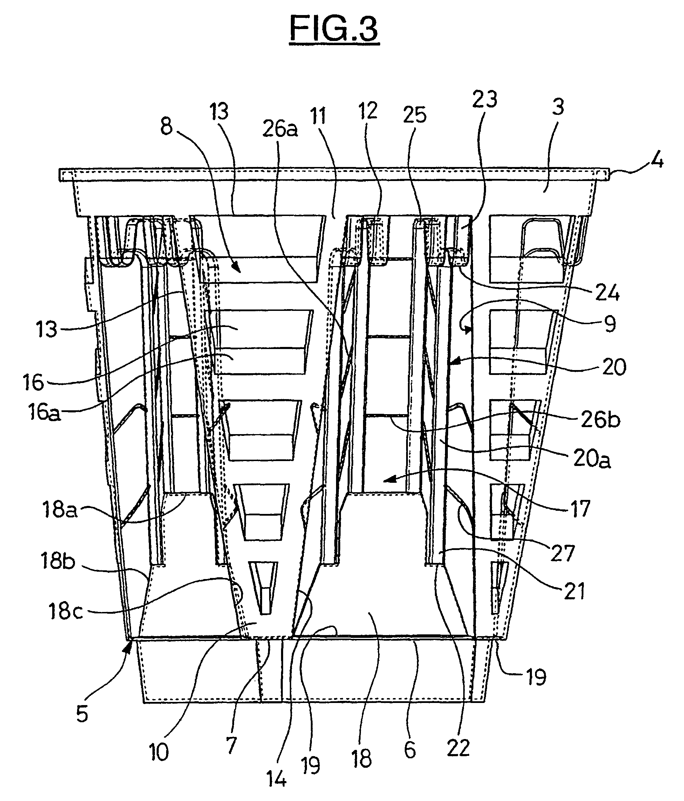

Dans la position que les parties déformables occupent lorsque le conteneur sort d'un moule de fabrication comme on le décrira plus loin et comme il est représenté sur les figures 1 à 3, en position pliée, les plaques 18 s'étendent vers le haut et les branches 20 présentent une portion inférieure rectiligne 20a et une portion supérieure qui présente deux plis successifs 24 et 25.

En outre, les parties déformables 17 comprennent une multiplicité de branches secondaires 26a et 26b qui relient entre elles les branches 20 et une multiplicité de branches 27 qui relient les branches 20 et les parties de liaison 8 adjacentes, ces branches secondaires 27 étant arquées.

En outre, le conteneur 1 comprend une soucoupe inférieure 28 à flancs hexagonaux dont les bords supérieurs sont reliés à la partie inférieure 5, entre lesquels est prévue une ligne d'affaiblissement 29 permettant, si besoin, de séparer la soucoupe par rupture le long de cette ligne.

Le conteneur 1 .qui vient d'être décrit peut avantageusement être fabriqué par injection d'une matière plastique dans un moule dont une partie présente un puits et l'autre partie une forme en saillie, qui, lorsqu'elles sont accouplées, déterminent entre elles des espaces déterminant la structure du conteneur 1 qui peut être démoulable en désaccouplant ces parties de moule.

Pour celà, comme le montrent les figures 1 à 3, les bords inférieurs des ouvertures 16 des parties de liaison 8, sont constitués par des pans coupés 16a présentant une dépouille. Les parties déformables 17 sont réalisées à l'intérieur de l'enveloppe tronconique entourant les parties de liaison 8. Les plaques 18 et les portions des branches 20, jusqu'à leurs plis s'étendent dans un même plan présentant une dépouille. Les plis 24 sont concaves vers le haut et les plis 25 des branches 20 sont concaves vers le bas. En ce qui concerne les autres éléments de structure du conteneur 1 décrits précédemment, ils présentent aussi des dépouilles de façon connue en soi.

Le conteneur 1 qui vient d'être décrit peut être utilisé de la façon suivante.

Lorsqu'on le remplit de terre, la charge qui en résulte pousse vers l'extérieur les parties déformables 17 en faisant basculer les plaques 18 autour de leurs lignes d'articulation 19. Les branches 20 pivotent par rapport aux plaques 18 le long de leurs lignes d'articulation 21 et leurs plis 24 et 25 s'allongent.

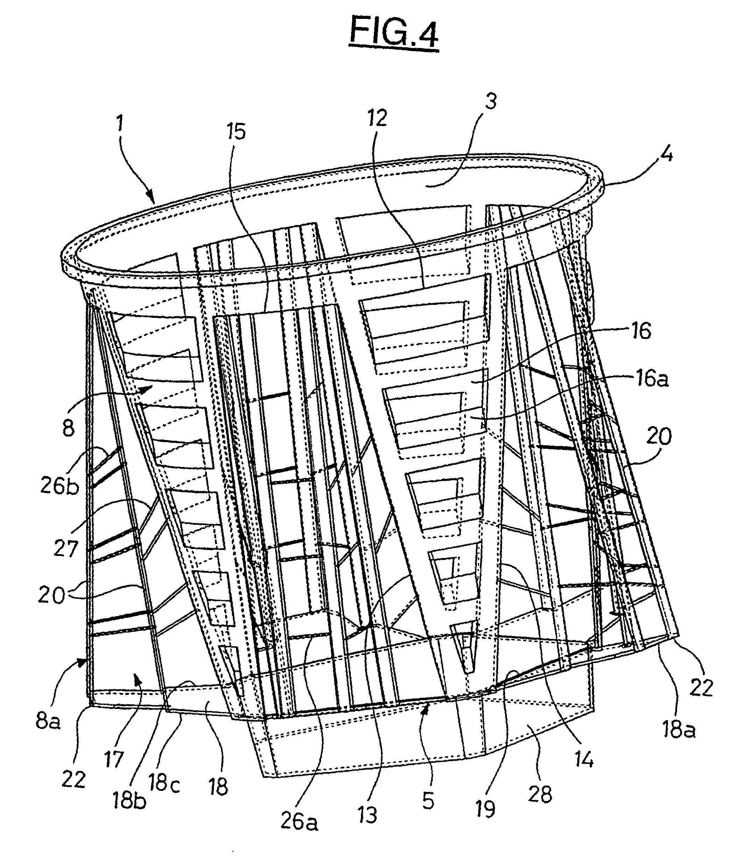

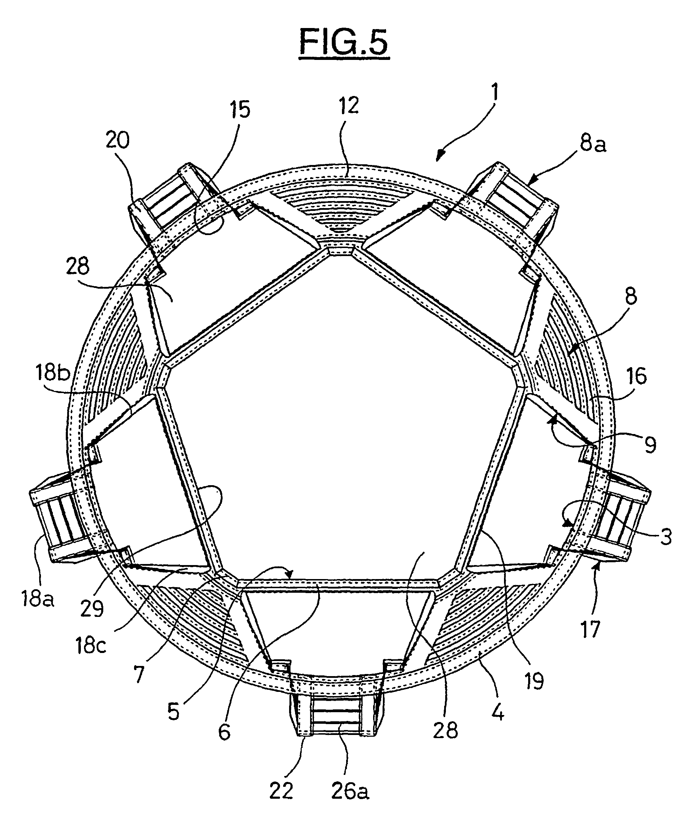

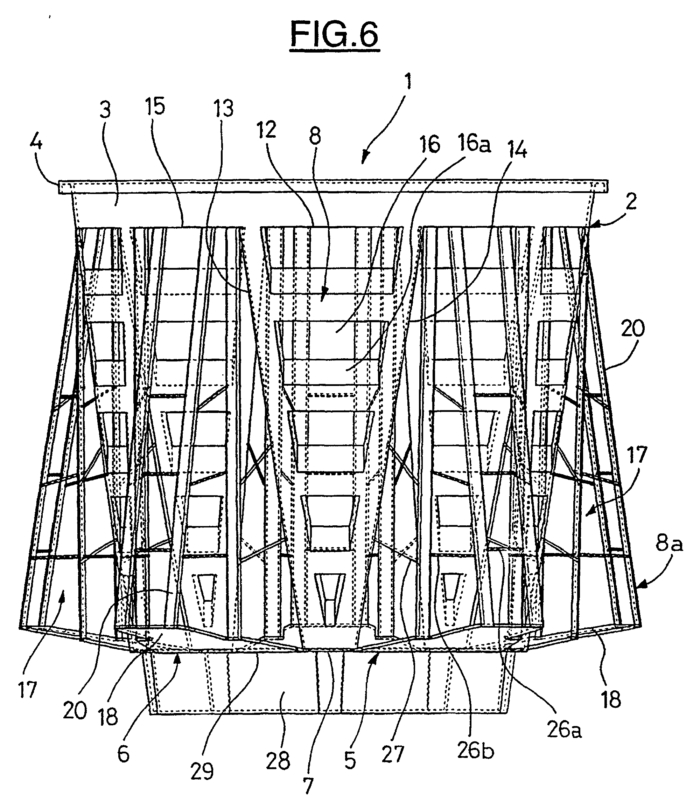

En position complètement déployée comme le montrent les figures 4 à 6, les plaques 18 sont légèrement inclinées vers l'intérieur du la soucoupe 28 et les branches 20 sont sensiblement rectilignes de haut en bas et les branches secondaires 27 sont sensiblement rectilignes, de telle sorte que les parties déformables 17 constituent des ventres 8a en saillie vers l'extérieur par rapport à l'enveloppe tronconique des parties de liaison 8.

Dans l'exemple représenté, les plaques 18 sont en forme de trapèzes qui présentent des petits côtés 18a parallèles aux lignes d'articulation 19 et deux côtés latéraux 18b et 18c qui forment un angle aïgu avec la ligne d'articulation 19. Les parties déformables 17 présentent deux branches 20 médianes qui s'étendent à partir du petit côté 18a des plaques 18 et deux branches 20 latérales qui s'étendent sensiblement à partir du milieu de leurs côtés latéraux 18b et 18c. Ainsi, les ventres 8a sont déterminés par quatre branches 20 régulièrement réparties sur leur pourtour.

Les dimensions des plaques 18, des branches principales 20 et des branches secondaires 26 et 27 sont dimensionnées de telle sorte que l'enveloppe des parties déformables 17 en position déployée constitue sensiblement un tronc de cône ouvert vers le bas. Ainsi, les ventres 8a présentent une partie inférieure plus volumineuse que leur partie supérieure et le volume de terre que le conteneur 1 peut recevoir dans sa portion inférieure est supérieur au volume qu'il peut recevoir dans sa portion supérieure.

Le conteneur 1 qui vient d'être décrit en position déployée, rempli de terre, permet d'améliorer la croissance vers le bas et vers l'extérieur du système racinaire du plant qu'il contient, en évitant ou en limitant la formation d'un chignon, et ce notamment grâce au volume accru de terre dans sa partie inférieure, et à la disposition des branches 20 et aux parties de liaison ajourées de sa paroi latérale 2. En outre, la paroi latérale 2 assure une aération périphérique de la terre et l'arrêt de la croissance des racines lorsqu'elles atteignent l'air libre, en provoquant la formation de boutons racinaires à leurs extrémités.

La soucoupe 28 constitue une réserve d'eau et la disposition inclinée vers l'intérieur des plaques 18 ramène au moins en partie vers la soucoupe 28 l'eau qui s'écoule vers le bas dans la terre que le conteneur contient.

Le conteneur 1 peut être utilisé également sans la soucoupe 28. Il suffit pour celà soit de le fabriquer sans cette soucoupe soit d'arracher cette dernière de la partie inférieure annulaire 5 le long de la ligne de rupture 29.

Lorsqu'on souhaite transplanter le plant élevé dans le conteneur 1, on peut soit enlever ce plant en tirant vers le haut soit couper la partie supérieure annulaire 3 et ouvrir le conteneur 1 pour le dégager.

Les lignes d'articulation 19 et 22 et les branches 20, notamment leurs plis 24 et 25, sont dimensionnées de façon à ce que les parties déformables 17 se déploient aisément tout en maintenant convenablement la terre.

Le déployement des parties déformables 17 peut se produire directement lors par exemple du remplissage automatique du conteneur 1 sur une machine vibrante.

La présente invention ne se limite pas à l'exemple ci-dessus décrit. En particulier, le nombre des parties de liaison 8 et des parties déformables 17 et le nombre de branches 20 pourraient être différents. Leurs structures et leurs dispositions pourraient être différentes. En particulier, les branches 20 pourraient être en zig-zag. Par ailleurs, les lignes d'affaiblissement 19 pourraient être arquées afin que les plaques 18 puissent occuper deux positions extrèmes plus stables.

Bien d'autres variantes de réalisation sont possibles sans sortir du cadre défini par les revendications annexées.

## Revendications

1. Conteneur pour la culture de plants, notamment d'arbres, dont la paroi latérale comprend une partie supérieure annulaire, une partie inférieure annulaire (5), qui sont coaxiales, des parties espacées de liaison (8) reliant et maintenant l'une par rapport à l'autre ladite partie supérieure et ladite partie inférieure, **caractérisé par le fait que** ladite paroi comprend entre lesdites parties de liaison, des parties déformables (17) comprenant des branches principales (20), qui, dans une position initiale, présentent des plis (24) et qui sont susceptibles d'être étendues ou allongées par déformation de ces plis de façon à atteindre une position déployée dans laquelle lesdites parties déformables forment des ventres (8a) en saillie vers l'extérieur.

2. Conteneur selon la revendication 1, **caractérisé par le fait que** lesdites branches (20) présentent des extrémités reliées d'une part à ladite partie supérieure et d'autre part à ladite partie inférieure.

3. Conteneur selon l'une des revendications 1 et 2, **caractérisé par le fait que** lesdites parties déformables (17) comprennent des branches secondaires (26a) reliant lesdites branches principales.

4. Conteneur selon l'une quelconque des revendications précédentes, **caractérisé par le fait que** lesdites parties déformables (17) comprennent des branches secondaires (27) reliant les branches principales et les parties espacées adjacentes.

5. Conteneur selon l'une quelconque des revendications précédentes, **caractérisé par le fait que** lesdites parties déformables (17) comprennent des plaques (18) reliées de façon articulée à ladite partie inférieure annulaire (5), lesdites branches principales présentant des extrémités reliées à ces plaques.

6. Conteneur selon la revendication 5, **caractérisé par le fait que** lesdites plaques (18), en position déployée vers l'extérieur, sont inclinées vers l'intérieur.

7. Conteneur selon l'une quelconque des revendications précédentes, **caractérisé par le fait qu'**il comprend une soucoupe (28) dont le bord périphérique est relié à ladite partie inférieure annulaire.

8. Conteneur selon la revendication 7, **caractérisé par le fait qu'**il comprend une ligne d'affaiblissement (29) entre ladite soucoupe et ladite partie annulaire inférieure, constituant une ligne de rupture pour la séparation de la soucoupe.

9. Conteneur selon l'une quelconque des revendications 5 à 8, **caractérisé par le fait qu'**il comprend des lignes d'affaiblissement (19) entre lesdites plaques (18) et ladite partie inférieure annulaire (5), constituant l'articulation précitée.

10. Conteneur selon la revendication 9, **caractérisé par le fait que** lesdites lignes d'affaiblisement sont rectilignes.

11. Conteneur selon la revendication 9, **caractérisé par le fait que** lesdites lignes d'affaiblissement sont arquées.

12. Conteneur selon l'une quelconque des revendications précédentes, **caractérisé par le fait que** lesdites parties de liaison (8) sont ajourées.

13. Conteneur selon l'une quelconque des revendications précédentes, **caractérisé par le fait qu'**en position déployée, lesdites parties déformables (17) présentent une partie inférieure plus volumineuse que leur partie supérieure.

14. Conteneur selon l'une quelconque des revendications précédentes, **caractérisé par le fait que** lesdites parties de liaison (8) présentent des génératrices droites.

15. Conteneur selon l'une quelconque des revendications précédentes, **caractérisé par le fait que**, lorsque ses parties déformables précitées (17) sont pliées, sa paroi latérale (2) présente des dépouilles telles qu'il peut être fabriqué par moulage par injection dans un moule dont une partie présente un puits et son autre partie une forme en saillie.

## Claims

1. A container for growing plants, especially trees, whereof the lateral wall comprises a ring-shaped upper part, a ring-shaped lower part (5), which are coaxial, spaced-apart linking parts (8) linking and maintaining relatively to each other said upper part and said lower part, said wall comprises, between said linking parts, deformable parts (17) comprising main branches (20), which, in an initial position, exhibit folds (24) and which are capable of being extended or elongated by deformation of said folds so as to attain an extended position in which said deformable parts form bulges (8a) projecting outwards.

2. The container as claimed in Claim 1, **characterised in that** said branches (20) exhibit extremities on the one hand linked to said upper part and on the other hand to said lower part.

3. The container as claimed in any one of Claims 1 and 2, **characterised in that** said deformable parts (17) comprise secondary branches (26a) linking said main branches.

4. The container as claimed in any one of the preceding claims, **characterised in that** said deformable parts (17) comprise secondary branches (27) linking the main branches and the adjacent spaced parts.

5. The container as claimed in any one of the preceding claims, **characterised in that** said deformable parts (17) comprise plates (18) articulated to said ring-shaped lower part (5), said main branches having extremities connected to these plates.

6. The container as claimed in Claim 5, **characterised in that** said plates (18), in an outwards extended position, are inclined inwards.

7. The container as claimed in any one of the preceding claims, **characterised in that** it comprises a saucer (28) whereof the peripheral edge is linked to said ring-shaped lower part.

8. The container as claimed in Claim 7, **characterised in that** it comprises a crease line (29) between said saucer and said lower ring-shaped part, constituting a breaking line for separating the saucer.

9. The container as claimed in any one of Claims 5 to 8, **characterised in that** it comprises crease lines (19) between said plates (18) and said ring-shaped lower part (5), constituting the abovementioned articulation.

10. The container as claimed in Claim 9, **characterised in that** said crease lines are rectangular.

11. The container as claimed in Claim 9, **characterised in that** said crease lines are arched.

12. The container as claimed in any one of the preceding claims, **characterised in that** said linking parts (8) are punched.

13. The container as claimed in any one of the preceding claims, **characterised in that** when in an extended position said deformable parts (17) exhibit a lower part more voluminous than their upper part.

14. The container as claimed in any one of the preceding claims, **characterised in that** said linking parts (8) exhibit straight generatrices.

15. The container as claimed in any one of the preceding claims, **characterised in that**, when its abovementioned deformable parts (17) are folded, its lateral wall (2) exhibits drafts such that it can be manufactured by injection moulding in a mould whereof one part exhibits a depression and its other part a bulge.

## Patentansprüche

1. Container für den Anbau von Pflanzen, namentlich von Bäumen, wovon die Seitenwand einen oberen ringförmigen Teil und einen unteren ringförmigen Teil (5), die beide koaxial sind, sowie voneinander entfernte Verbindungsteile (8) aufweist, die den genannten oberen Teil mit dem genannten unteren Teil verbinden und den einen Teil im Verhältnis zum anderen Teil halten, **dadurch gekennzeichnet, dass** die genannte Wand zwischen den genannten Verbindungsteilen deformierbare Teile (17) aufweist, die Hauptzweige (20) umfassen, die in einer Ausgangsposition Falten (24) aufweisen und die in der Lage sind, durch Deformierung dieser Falten gedehnt oder gestreckt zu werden, so dass eine entfaltete Position erreicht wird, in der die genannten deformierbaren Teile nach außen vorspringende Bäuche (8a) bilden.

2. Container nach Anspruch 1, **dadurch gekennzeichnet, dass** die genannten Zweige (20) Extremitäten aufweisen, die einerseits mit dem genannten oberen Teil und andererseits mit dem genannten unteren Teil verbunden sind.

3. Container nach einem der Ansprüche 1 und 2, **dadurch gekennzeichnet, dass** die genannten deformierbaren Teile (17) Zusatzzweige (26a) umfassen, die die genannten Hauptzweige miteinander verbinden.

4. Container nach einem der vorhergehenden Ansprüche, **dadurch gekennzeichnet, dass** die genannten deformierbaren Teile (17) Zusatzzweige (27) umfassen, die die Hauptzweige mit den benachbarten voneinander entfernten Teilen verbinden.

5. Container nach einem der vorhergehenden Ansprüche, **dadurch gekennzeichnet, dass** die genannten deformierbaren Teile (17) Platten (18) aufweisen, die durch ein Gelenk mit dem genannten unteren ringförmigen Teil (5) verbunden sind, wobei die genannten Hauptzweige Extremitäten aufweisen, die mit diesen Platten verbunden sind.

6. Container nach Anspruch 5, **dadurch gekennzeichnet, dass** die genannten Platten (18) in nach außen entfalteter Position nach innen schräggestellt sind.

7. Container nach einem der vorhergehenden Ansprüche, **dadurch gekennzeichnet, dass** er eine Untertasse (28) aufweist, deren peripherer Rand mit dem genannten unteren ringförmigen Teil verbunden ist.

8. Container nach Anspruch 7, **dadurch gekennzeichnet, dass** er eine Dämpfungslinie (29) zwischen der genannten Untertasse und dem genannten unteren ringförmigen Teil aufweist, die eine Bruchlinie für die Trennung der Untertasse darstellt.

9. Container nach einem der Ansprüche 5 bis 8, **dadurch gekennzeichnet, dass** er Dämpfungslinien (19) zwischen den genannten Platten (18) und dem genannten unteren ringförmigen Teil (5) aufweist, die das vorgenannte Gelenk bilden.

10. Container nach Anspruch 9, **dadurch gekennzeichnet, dass** die genannten Dämpfungslinien geradlinig sind.

11. Container nach Anspruch 9, **dadurch gekennzeichnet, dass** die genannten Dämpfungslinien gekrümmt sind.

12. Container nach einem der vorhergehenden Ansprüche, **dadurch gekennzeichnet, dass** die genannten Verbindungsteile (8) durchbrochen sind.

13. Container nach einem der vorhergehenden Ansprüche, **dadurch gekennzeichnet, dass** die genannten deformierbaren Teile (17) in entfalteter Position einen unteren Teil aufweisen, der voluminöser als der obere Teil ist.

14. Container nach einem der vorhergehenden Ansprüche, **dadurch gekennzeichnet, dass** die genannten Verbindungsteile (8) gerade Mantellinien aufweisen.

15. Container nach einem der vorhergehenden Ansprüche, **dadurch gekennzeichnet, dass** in gefalteter Position der vorgenannten deformierbaren Teile (17) seine Seitenwand (2) Freiflächen aufweist, wie sie durch Spritzguss in einer Gussform hergestellt werden können, von der ein Teil einen Schacht und der andere Teil eine vorspringende Form aufweist.
